(19) Europäisches Patentamt
European Patent Office
Office européen des brevets

(11) **EP 2 659 235 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **11788136.7**

(22) Anmeldetag: **23.11.2011**

(51) Int Cl.:
*G01F 25/00* (2006.01)        *G01F 1/32* (2006.01)
*G01F 1/74* (2006.01)        *G01F 1/86* (2006.01)
*G01F 15/02* (2006.01)

(86) Internationale Anmeldenummer:
**PCT/EP2011/070864**

(87) Internationale Veröffentlichungsnummer:
**WO 2012/089430 (05.07.2012 Gazette 2012/27)**

(54) **VERFAHREN ZUR DICHTEKORREKTUR IN WIRBELSTRÖMUNGSMESSGERÄT**

METHOD FOR DENSITY CORRECTION IN AN EDDY-FLOW MEASURING INSTRUMENT

PROCEDE POUR LA CORRECTION DE LA DENSITÉ DANS UN DÉBITMÈTRE À TOURBILLONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2010 DE 102010064278**

(43) Veröffentlichungstag der Anmeldung:
**06.11.2013 Patentblatt 2013/45**

(73) Patentinhaber: **Endress+Hauser Flowtec AG
4153 Reinach (CH)**

(72) Erfinder:
• **HOLLMACH, Marc
CH-4056 Basel (CH)**
• **KAMBER, Sascha
CH-4147 Aesch (CH)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
WO-A1-00/55580        WO-A1-2009/003966
US-A1- 2006 260 384        US-A1- 2007 163 361
US-A1- 2008 141 769

**Beschreibung**

Die vorliegende Erfindung betrifft ein Verfahren zum Bestimmen eines Massedurchflusses eines, zumindest zeitweise mindestens zweiphasigen Mediums durch ein Messrohr eines Wirbelströmungsmessgerätes, wobei das Messrohr in einem Messquerschnitt mindestens einen Staukörper zur Erzeugung von Wirbeln aufweist und wobei durch sensorische Erfassung der erzeugten Wirbel eine Strömungsgeschwindigkeit des Mediums im Bereich des Messquerschnitts bestimmt wird sowie ein entsprechend ausgebildetes Wirbelströmungsmessgerät.

Für die Durchflussmessung von strömungsfähigen Medien (z.B. Fluiden) in Rohrleitungen, insbesondere von Gasströmungen oder Dampfströmungen im Hochtemperaturbereich, werden häufig Wirbelströmungsmessgeräte eingesetzt. Bei derartigen Wirbelströmungsmessgeräten wird ein Staukörper, der ein Strömungshindernis für das strömende Medium bildet, derart in dem Strömungspfad angeordnet, dass das jeweilige Medium beidseitig des Strömungshindernisses vorbeiströmen kann. Dabei lösen sich an dem Strömungshindernis zu beiden Seiten hin Wirbel ab. Über einen weiten Reynoldszahlbereich lösen sich die Wirbel dabei alternierend an den beiden Seiten des Strömungshindernisses ab, so dass eine gestaffelte Anordnung der Wirbel entsteht. Diese gestaffelte Anordnung der Wirbel wird als Kärmän'sche Wirbelstraße bezeichnet. Bei Wirbelströmungsmessgeräten wird dabei das Prinzip ausgenutzt, dass die Wirbelablösefrequenz, mit der diese Wirbel gebildet werden, über einen weiten Reynoldszahlbereich proportional zur Strömungsgeschwindigkeit bzw. zum Volumendurchfluss des jeweiligen Mediums ist. Die erzeugten Wirbel werden in dem Wirbelströmungsmessgerät sensorisch erfasst. Dementsprechend kann aus der erfassten Wirbelablösefrequenz der Wirbel, die im Folgenden als Vortexfrequenz bezeichnet wird, und einen, für den jeweiligen Typ von Wirbelströmungsmessgerät charakteristischen Kalibrierfaktor die Strömungsgeschwindigkeit bzw. der Volumendurchfluss bestimmt werden.

Liegen innerhalb der Rohrleitung Prozessbedingungen im Bereich eines Phasenübergangs des strömenden Mediums oder eines in dem Medium enthaltenen Stoffes vor, so kann bei einem Teil des Mediums ein Phasenübergang stattfinden. Das Medium liegt dann in zwei oder mehreren Phasen vor. Insbesondere kann ein Teil eines gasförmigen Mediums auskondensieren. Bei der Bestimmung des Volumendurchflusses oder des Massedurchflusses durch ein Wirbelströmungsmessgerät besteht dabei das Problem, dass dieses innerhalb des Messrohres im Bereich des Staukörpers (Messquerschnitt) einen reduzierten Strömungsquerschnitt verglichen mit einem stromaufwärtigen und einem stromabwärtigen Abschnitt des Messrohres aufweist. Dadurch ist die Strömungsgeschwindigkeit des Mediums im Bereich des Messquerschnitts lokal erhöht. Bei inkompressiblen Medien kann dieser Effekt relativ einfach in einen Kalibrierfaktor mit eingerechnet werden, durch den das (durch das Verhältnis der Strömungsquerschnitte vorgegebene und feste) Verhältnis zwischen der Strömungsgeschwindigkeit im Bereich des Messquerschnitts und der Strömungsgeschwindigkeit in einem stromaufwärts oder stromabwärts des Messquerschnitts gelegenen Rohrleitungsabschnitt (nachfolgend: Anschlussrohr) berücksichtigt wird. Bei kompressiblen Medien, wie beispielsweise bei Gasen, ist dieses Verhältnis jedoch nicht fest. Beispielsweise treten bei gasförmigen Medien im Bereich des Messquerschnitts ein erheblicher Temperaturabfall und ein Druckabfall auf. Die Dichte des Mediums unterscheidet sich im Bereich des Messquerschnitts erheblich von der Dichte im Anschlussrohrbereich. Zusätzlich kann der Fall auftreten, dass aufgrund der unterschiedlichen Prozessbedingungen im Bereich des Messquerschnitts ein Teil des Mediums auskondensiert, während er im Anschlussrohrbereich wieder verdampft, was zu einer erheblichen Abweichung der Dichte des Mediums im Bereich des Messquerschnitts von der Dichte des Mediums im Anschlussrohrbereich führt. Allgemein kann die Problematik auftreten, dass aufgrund der, im Bereich des Messquerschnitts vorliegenden Prozessbedingungen bei einem Teil des Mediums ein Phasenübergang auftritt, der nachfolgend im Anschlussrohrbereich wieder in umgekehrter Richtung abläuft. Wird ausgehend von der lokal im Bereich des Messquerschnitts gemessenen Strömungsgeschwindigkeit (alternativ: von dem lokal im Bereich des Messquerschnitts gemessenen Volumendurchfluss) mit einem konstanten Kalibrierfaktor, der spezifisch für den jeweiligen Typ von Wirbelströmungsmessgerät ist, die Strömungsgeschwindigkeit im Anschlussrohrbereich berechnet, so tritt aufgrund der oberhalb erläuterten Effekte ein Fehler auf. Diese Problematik besteht insbesondere dann, wenn im Bereich des Messquerschnitts aufgrund der lokal im Bereich des Messquerschnitts auftretenden Prozessbedingungen ein Phasenübergang von einem Teil des Mediums auftritt.

Dementsprechend besteht die Aufgabe der vorliegenden Erfindung darin, ein Verfahren zur Bestimmung eines Durchflussmesswertes sowie ein entsprechend ausgebildetes Wirbelströmungsmessgerät bereitzustellen, bei dem das Auftreten eines Messfehlers aufgrund eines lokal, im Bereich des Messquerschnitts auftretenden Phasenübergangs eines Teils des Mediums vermieden wird.

Die Aufgabe wird durch ein Verfahren gemäß Anspruch 1 sowie durch ein Wirbelströmungsmessgerät gemäß Anspruch 12 gelöst. Vorteilhafte Weiterbildungen der Erfindung sind in den Unteransprüchen angegeben.

Gemäß der vorliegenden Erfindung wird ein Verfahren zum Bestimmen eines Massedurchflusses eines, zumindest zeitweise mindestens zweiphasigen Mediums durch ein Messrohr eines Wirbelströmungsmessgerätes bereitgestellt. Dabei weist das Messrohr in einem Messquerschnitt mindestens einen Staukörper zur Erzeugung von Wirbeln auf und durch sensorische Erfassung der erzeugten Wirbel wird eine Strömungsgeschwindigkeit des Mediums im Bereich des Messquerschnitts bestimmt. Das Verfahren weist dabei die Schritte von Anspruch 1 auf.

Indem gemäß der vorliegenden Erfindung die Dichte des Mediums im Bereich des Messquerschnitts bestimmt wird, kann aus dieser zusammen mit der Strömungsgeschwindigkeit im Bereich des Messquerschnitts (die durch das Wirbelströmungsmessgerät lokal im Bereich des Messquerschnitts erfasst wird) und dem Strömungsquerschnitt des Mediums im Bereich des Messquerschnitts (der aufgrund der Geräteabmessungen bekannt ist), der korrekte Massedurchfluss des Mediums berechnet werden. Da der Massenstrom entlang der Medium-führenden Rohrleitung konstant ist, bildet der so ermittelte Massedurchfluss auch einen korrekten Wert für den Anschlussrohrbereich. Indem bei dem Schritt des Bestimmens der Dichte (Schritt A)) die spezifische, totale Enthalpie des Mediums im Bereich des Messquerschnitts, die Strömungsgeschwindigkeit des Mediums im Bereich des Messquerschnitts, der statische Druck des Mediums im Bereich des Messquerschnitts und die statische Temperatur des Mediums im Bereich des Messquerschnitts eingehen, wird berücksichtigt, dass gegebenenfalls bei einem Teil des Mediums ein Phasenübergang stattgefunden hat. Ein Messfehler des bestimmten Massedurchflusses, der dadurch bedingt ist, dass lokal im Bereich des Messquerschnitts ein Phasenübergang eines Teils des Mediums stattfindet, wird somit vermieden.

Wie in dem Fachgebiet allgemein bekannt ist, ergibt die Summe aus dem statischen Druck und dem dynamischen Druck eines strömenden Mediums dessen Totaldruck. Entsprechend ergibt die Summe aus der statischen Temperatur und der dynamischen Temperatur eines strömenden Mediums dessen Totaltemperatur. Dabei sind in dem Fachgebiet entsprechende Sensoren bekannt, durch die der statische Druck und die statische Temperatur eines strömenden Mediums, insbesondere des strömenden Mediums im Bereich des Messquerschnitts, erfassbar sind.

Als Medium wird allgemein ein strömungsfähiges Medium bezeichnet, das aus einem (einzigen) Stoff (z.B. $H_2O$) oder einem Stoffgemisch (z.B. Luft enthaltend Wasserdampf) gebildet sein kann. Das Medium liegt insbesondere in einer gasförmigen Phase vor, wobei ein Teil desselben zeitweise oder dauerhaft in einer zweiten Phase (flüssig oder fest) vorliegt. Dabei können die erste und die zweite Phase durch ein und denselben Stoff gebildet werden, der zu einem ersten Anteil in einer ersten Phase (bzw. Aggregatszustand) vorliegt und der zu einem zweiten Anteil in einer zweiten Phase (bzw. Aggregatszustand) vorliegt. Setzt sich das Medium aus mehreren Stoffen (z.B. unterschiedliche Gase, insbesondere Luft enthaltend Wasserdampf) zusammen, so kondensiert (d.h. Phasenübergang in flüssige Phase) oder friert (d.h. Phasenübergang in feste Phase) insbesondere nur ein Stoff desselben bei den, in Frage kommenden Prozessbedingungen zumindest teilweise aus. Weiterhin kann das Medium auch noch mindestens eine weitere Phase, wie beispielsweise Feststoffteile (z.B. Sand oder Staub) mitführen, bei der bei den in Frage kommenden Prozessbedingungen jedoch kein Phasenübergang stattfindet. Das Medium kann also auch mehr als nur zwei Phasen aufweisen.

Das Messrohr, in welchem der Staukörper angeordnet ist, bildet einen Teil des Wirbelströmungsmessgerätes und wird in eine, das strömende Medium führende Rohrleitung eingesetzt. Die, durch den Staukörper erzeugten Wirbel in dem strömenden Medium bilden insbesondere Kärmän'sche Wirbel, die durch mindestens einen entsprechenden Wirbelsensor des Wirbelströmungsmessgerätes erfassbar sind. Der Stauköper weist insbesondere mindestens zwei derart ausgebildete Abrisskanten auf, dass sich an diesen im Einsatz Kärmän'sche Wirbel ablösen. Die spezifische, totale Enthalpie wird insbesondere durch die Summe der spezifischen Enthalpie und der spezifischen, kinetischen Energie des Mediums gebildet.

Gemäß der Erfindung werden die Schritte des Bestimmens der Strömungsgeschwindigkeit, des Bestimmens der Dichte (vgl. Schritt A)) und des Bestimmens des Massedurchflusses (vgl. Schritt B)) in dem Wirbelströmungsmessgerät durchgeführt. Insbesondere werden die, durch den Staukörper erzeugten Wirbel sensorisch (durch mindestens einen, entsprechend ausgebildeten Sensor) erfasst und die nachfolgenden Schritte des Bestimmens durch eine entsprechend ausgebildete Elektronik des Wirbelströmungsmessgerätes durchgeführt. Die Elektronik kann dabei digital und/oder analog ausgebildet sein, wie es in dem Fachgebiet allgemein bekannt ist.

In der Regel kann die spezifische, totale Enthalpie im Bereich des Messquerschnitts nicht unmittelbar bestimmt werden. Gemäß einer Weiterbildung wird die spezifische, totale Enthalpie des Mediums im Bereich des Messquerschnitts aus dem (statischen) Druck und der (statischen) Temperatur eines Systems bestimmt, dem das strömende Medium entnommen wird und in dem das Medium vor dessen Entnahme ruht. In einem solchen, ruhendem System entsprechen der Totaldruck und die Totaltemperatur jeweils dem statischen Druck und der statischen Temperatur des Mediums. Insbesondere liegt das Medium in diesem System in nur einer Phase, wie beispielsweise gasförmig, vor. Insbesondere wird davon ausgegangen, dass diese spezifische, totale Enthalpie durch das Medium auf dem Weg von dem System bis zu dem Messquerschnitt beibehalten wird. Dabei werden insbesondere die vereinfachenden Annahmen getroffen, dass es sich um eine stationäre Strömung des Mediums handelt und dass zwischen dem System und dem Messquerschnitt keine Wärmequellen existieren, dass kein Wärmestrom zu bzw. von dem Medium weg auftritt, dass keine Reibung auftritt und dass keine Änderung der potentiellen Energie auftritt. Die spezifische, totale Enthalpie entspricht in einem System, in dem das betreffende Medium ruht, der spezifischen Enthalpie. Diese kann anhand bekannter Korrelationen aus dem (statischen bzw. totalen) Druck und der (statischen bzw. totalen) Temperatur des Mediums in dem System bestimmt werden. Setzt sich das Medium aus mehreren Stoffen (Elemente, wie z.B. $O_2$, oder Verbindungen, wie z.B. $H_2O$) mit jeweils bekannten Massenanteilen zusammen, so kann die spezifische, totale Enthalpie jeweils separat für die verschiedenen Stoffe bestimmt werden. Anhand der jeweiligen Massenanteile der verschiedenen Stoffe kann dann die spezifische, totale Enthalpie für das Medium insgesamt bestimmt werden.

Gemäß einer Weiterbildung wird die spezifische, totale Enthalpie des Mediums im Bereich des Messquerschnitts aus einer bekannten, spezifischen, totalen Enthalpie des Mediums in einem, stromaufwärts oder stromabwärts von dem Messquerschnitt gelegenen Abschnitt unter Berücksichtigung eines Wärmeübergangs auf das strömende Medium von dem Abschnitt bis zu dem Messquerschnitt bestimmt. Insbesondere liegt der Abschnitt, in welchem die bekannte, spezifische, totale Enthalpie vorliegt, stromaufwärts von dem Bereich des Messquerschnitts. Insbesondere kann es sich bei dem Abschnitt auch um das oberhalb angegebene System handeln, dem das strömende Medium entnommen wird und in dem das Medium vor dessen Entnahme ruht. Alternativ kann es sich aber auch um einen anderen Abschnitt entlang des Strömungspfades des Mediums handeln, in dem dessen spezifische, totale Enthalpie bekannt ist. Der Wärmeübergang auf das strömende Medium von dem Abschnitt, in dem die spezifische, totale Enthalpie des Mediums bekannt ist bis zu dem Bereich des Messquerschnitts kann, je nach Einsatzbedingungen, in einer Wärmezufuhr oder in einer Wärmeabfuhr bestehen. Weiterhin ist der Wärmeübergang auf das Medium, wie unterhalb im Detail erläutert wird, von dem Massedurchfluss des Mediums abhängig.

Gemäß der Erfindung werden der statische Druck und die statische Temperatur des Mediums in dem Bereich des Messquerschnitts erfasst. Diese Messwerte werden zur Bestimmung der Dichte des Mediums (vgl. Schritt A)) herangezogen. Hierzu ist in dem Bereich des Messquerschnitts zumindest ein Drucksensor zur Erfassung des statischen Drucks vorgesehen. Im Bereich des Messquerschnitts ist zumindest ein Temperatursensor zur Erfassung der statischen Temperatur vorgesehen.

Gemäß einer Weiterbildung enthält das strömende Medium mindestens einen Stoff, der zumindest bei einem Teil der möglichen (bzw. in Frage kommenden) Prozessbedingungen im Bereich des Messquerschnitts zu einem ersten Massenanteil in einer ersten Phase (bzw. Aggregatszustand) und zu dem verbleibenden, zweiten Massenanteil dieses Stoffes in einer zweiten Phase (bzw. Aggregatszustand) vorliegt. Als Stoff wird in diesem Zusammenhang ein Element (z.B. $O_2$, $N_2$, etc.) oder eine Verbindung (z.B. $CO_2$, $H_2O$, etc.) bezeichnet, der insbesondere bei Durchlaufen des jeweiligen Phasenübergangs chemisch unverändert bleibt. Das Medium kann dabei, wie oberhalb erläutert wird, auch aus mehreren Stoffen (z.B. aus einem Gasgemisch, einem Gasgemisch mit Flüssigkeitsanteilen, etc.) bestehen, wobei vorzugsweise die Massenanteile der einzelnen Stoffe bekannt sind. Dabei ist bevorzugt, dass bei den in Frage kommenden Prozessbedingungen nur genau ein Stoff in zwei Phasen (bzw. Aggregatszuständen) vorliegen kann und die weiteren Stoffe jeweils nur in genau einer Phase vorliegen. Gemäß einer Weiterbildung ist dabei die erste Phase gasförmig und die zweite Phase ist flüssig. Insbesondere wird das Medium durch Wasserdampf gebildet, bei dem zumindest bei den im Bereich des Messquerschnitts in Frage kommenden Prozessbedingungen ein Teil auskondensieren kann, so dass Nassdampf vorliegt. Alternativ kann das Medium beispielsweise auch durch Wasserdampf mitführende Luft gebildet werden, bei der zumindest bei den im Bereich des Messquerschnitts in Frage kommenden Prozessbedingungen ein Teil des mitgeführten Wasserdampfs auskondensieren kann.

Gemäß einer Weiterbildung wird der erste Massenanteil des Stoffes dadurch bestimmt, dass eine Gleichung, in welcher die spezifische, totale Enthalpie des Mediums im Bereich des Messquerschnitts durch die Summe der kinetischen Energie des Mediums im Bereich des Messquerschnitts, der spezifischen Enthalpie von dem Stoff in der ersten Phase im Bereich des Messquerschnitts mal den ersten Massenanteil des Stoffes, der spezifischen Enthalpie von dem Stoff in der zweiten Phase im Bereich des Messquerschnitts mal den zweiten Massenanteil des Stoffes und gegebenenfalls weiterer, spezifischer Enthalpien im Bereich des Messquerschnitts von weiteren, in dem Medium enthaltenen Stoffen in deren jeweiliger Phase mal deren jeweiligen Massenanteilen ausgedrückt wird, nach dem ersten Massenanteil des Stoffes in der ersten Phase aufgelöst wird. Daraus kann auch der zweite Massenanteil des Stoffes in der zweiten Phase bestimmt werden. Wird das Medium aus mehreren Stoffen gebildet, so sollten die Massenanteile der jeweiligen Stoffe bekannt sein. Dementsprechend kann, wie nachfolgend erläutert wird, die im Bereich des Messquerschnitts vorliegende Dichte auch dann korrekt bestimmt werden, wenn ein Teil eines Stoffes einen Phasenübergang durchläuft. Gemäß einer Weiterbildung wird die Dichte des Mediums im Bereich des Messquerschnitts aus dem ersten Massenanteil des Stoffes in der ersten Phase und dessen Dichte im Bereich des Messquerschnitts, dem zweiten Massenanteil des Stoffes in der zweiten Phase und dessen Dichte im Bereich des Messquerschnitts sowie gegebenenfalls weiterer Massenanteile von weiteren, in dem Medium enthaltenen Stoffen in deren jeweiliger Phase und deren jeweiliger Dichten im Bereich des Messquerschnitts bestimmt.

Gemäß einer Weiterbildung wird mindestens eine der nachfolgenden, im Bereich des Messquerschnitts vorliegenden Größen aus dem, im Bereich des Messquerschnitts vorliegenden, statischen Druck des Mediums und aus der, im Bereich des Messquerschnitts vorliegenden, statischen Temperatur des Mediums bestimmt:

- die spezifische Enthalpie des Stoffes in der ersten Phase im Bereich des Messquerschnitts;
- die spezifische Enthalpie des Stoffes in der zweiten Phase im Bereich des Messquerschnitts;
- weitere spezifische Enthalpien von weiteren, in dem Medium enthaltenen Stoffen in deren jeweiliger Phase im Bereich des Messquerschnitts;
- Dichte des Stoffes in dessen erster Phase im Bereich des Messquerschnitts;
- Dichte des Stoffes in dessen zweiter Phase im Bereich des Messquerschnitts; und/oder
- Dichte von weiteren, in dem Medium enthaltenen Stoffen in deren jeweiliger Phase im Bereich des Messquerschnitts.

Wie allgemein bekannt ist, kann die spezifische Enthalpie des jeweiligen Stoffes in einer bestimmten Phase (bzw. Aggregatszustand) desselben anhand von dessen statischem Druck und dessen statischer Temperatur bestimmt werden. Hierfür werden insbesondere entsprechende Korrelationen verwendet. Auch kann die Dichte des jeweiligen Stoffes in einer bestimmten Phase (bzw. Aggregatszustand) desselben anhand von dessen statischem Druck und dessen statischer Temperatur bestimmt werden. Auf diese Weise können die, für das erfindungsgemäße Verfahren benötigten Größen einfach anhand des lokal, im Bereich des Messquerschnitts vorliegenden, statischen Drucks und der statischen Temperatur bestimmt werden.

Gemäß einer Weiterbildung sind im Voraus ermittelte Abhängigkeiten der Dichte des Mediums im Bereich des Messquerschnitts von der spezifischen, totalen Enthalpie des Mediums im Bereich des Messquerschnitts, der Strömungsgeschwindigkeit des Mediums im Bereich des Messquerschnitts, dem statischen Druck des Mediums im Bereich des Messquerschnitts und der statischen Temperatur des Mediums im Bereich des Messquerschnitts elektronisch hinterlegt und bei dem Schritt des Bestimmens der Dichte des Mediums im Bereich des Messquerschnitts wird die Dichte anhand der, im Bereich des Messquerschnitts tatsächlich vorliegenden Größen der spezifischen, totalen Enthalpie des Mediums im Bereich des Messquerschnitts, der Strömungsgeschwindigkeit des Mediums im Bereich des Messquerschnitts, des statischen Druckes des Mediums im Bereich des Messquerschnitts und der statischen Temperatur des Mediums im Bereich des Messquerschnitts bestimmt. Die Ermittlung der Abhängigkeiten der Dichte von den jeweils angegebenen, physikalischen Größen im Voraus kann insbesondere experimentell erfolgen. Insbesondere können (im Rahmen einer Kalibrierungsmessung) jeweils verschiedene, bekannte Massedurchflusswerte in dem betreffenden Wirbeldurchflussmessgerät eingestellt werden und die weiteren, physikalischen Größen (spezifische, totale Enthalpie, Strömungsgeschwindigkeit, statischer Druck, statische Temperatur), die im Bereich des Messquerschnitts vorliegen, erfasst bzw. bestimmt werden. Aus der lokal im Messquerschnitt gemessenen Strömungsgeschwindigkeit (oder auch dem lokal gemessenen Volumendurchfluss) und dem jeweils bekannten Masedurchflusswert kann dann die Dichte des Mediums im Bereich des Messquerschnitts bei den betreffenden Prozessbedingungen bestimmt werden. Diese experimentelle Ermittlung wird insbesondere für verschiedene Werte der oberhalb angegebenen, jeweils im Bereich des Messquerschnitts vorliegenden, physikalischen Größen (spezifische, totale Enthalpie, Strömungsgeschwindigkeit, statischer Druck, statische Temperatur) durchgeführt, so dass die Abhängigkeiten der Dichte im Bereich des Messquerschnitts von diesen Größen bestimmt werden können. Alternativ zu der oberhalb erläuterten, experimentellen Ermittlung kann solche eine Ermittlung auch rechnerisch erfolgen. Die "elektronische Hinterlegung" erfolgt insbesondere in einem elektronischen Speicher des Wirbelströmungsmessgerätes, auf den eine Prozessoreinheit des Wirbelströmungsmessgerätes zugreifen kann. Stimmt eine oder mehrere der tatsächlich (im Einsatz) erfassten oder bestimmten, physikalischen Größen (spezifische, totale Enthalpie, Strömungsgeschwindigkeit, statischer Druck, statische Temperatur) nicht genau mit jeweils einer der elektronisch hinterlegten, physikalischen Größen überein (sondern liegt beispielsweise zwischen zwei Werten), so kann bei der Bestimmung der Dichte eine entsprechende Interpolation zwischen den jeweils benachbarten, hinterlegten Werten durchgeführt werden. Grundsätzlich kann im Rahmen dieser Weiterbildung die Dichte selbst bestimmt werden oder eine, für die Dichte charakteristische Größe, aus der aufgrund allgemein bekannter, physikalischer Zusammenhänge die Dichte erhältlich ist. Alternativ zu der Dichte kann beispielsweise der erste Massenanteil des Stoffes, der in zwei Phasen vorliegen kann, jeweils im Voraus für die verschiedenen Prozessbedingungen ermittelt werden und dessen Abhängigkeiten von den oberhalb angegebenen, physikalischen Größen (spezifische, totale Enthalpie, Strömungsgeschwindigkeit, statischer Druck, statische Temperatur) können elektronisch hinterlegt werden. Ferner kann im Rahmen dieser Weiterbildung auch eine andere, physikalische Größe, an deren Bestimmung ein Bedarf besteht, wie beispielsweise der Volumendurchfluss im Anschlussrohrbereich, (im Rahmen von Kalibrierungsmessungen oder rechnerisch) bestimmt werden. Entsprechend dieser erläuterten Abwandlungen kann auch die nachfolgend erläuterte Tabelle abgewandelt ausgestaltet sein.

Gemäß einer Weiterbildung sind die Abhängigkeiten der Dichte des Mediums im Bereich des Messquerschnitts von der spezifischen, totalen Enthalpie des Mediums im Bereich des Messquerschnitts, der Strömungsgeschwindigkeit des Mediums im Bereich des Messquerschnitts, des statischen Druckes des Mediums im Bereich des Messquerschnitts und der statischen Temperatur des Mediums im Bereich des Messquerschnitts in Form einer mehrdimensionalen Tabelle hinterlegt.

Die vorliegende Erfindung betrifft ferner ein Wirbelströmungsmessgerät gemäss Anspruch 12.

Die Erfindung wird durch die Ansprüche definiert.

WO 2009/003966 offenbart ein Wirbelströmungsmessgerät, die Messung einer Temperatur, einer Strömungsgeschwindigkeit und eines Drucks. Eine provisorische Dichte wird aus der gemessenen Temperatur, dem gemessenen Druck und der spezifischen freien Enthalpie ermittelt. US 2007/163361 offenbart ein Wirbelströmungsmessgerät zusammen mit einem Temperatur- und einem Drucksensor, die in einem verjüngten Messquerschnitt angeordnet sind. Das Wirbelströmungsmessgerät misst den Durchfluss und berechnet die Dichte aus den von Temperatur- und Drucksensor gemessenen Werten.

Vorteile und Zweckmäßigkeiten der Erfindung ergeben sich anhand der nachfolgenden Beschreibung eines Ausführungsbeispiels unter Bezugnahme auf die beigefügten Figuren. Von den Figuren zeigen:

Fig. 1: eine schematische Darstellung eines Wirbelströmungsmessgerätes in perspektivischer, teilweise aufgeschnittener Ansicht; und

Fig. 2: eine schematische Querschnittansicht in axialer Richtung durch ein Messrohr eines Wirbelströmungsmessgerätes zur Veranschaulichung des Auftretens eines Phasenübergangs im Bereich des Messquerschnitts.

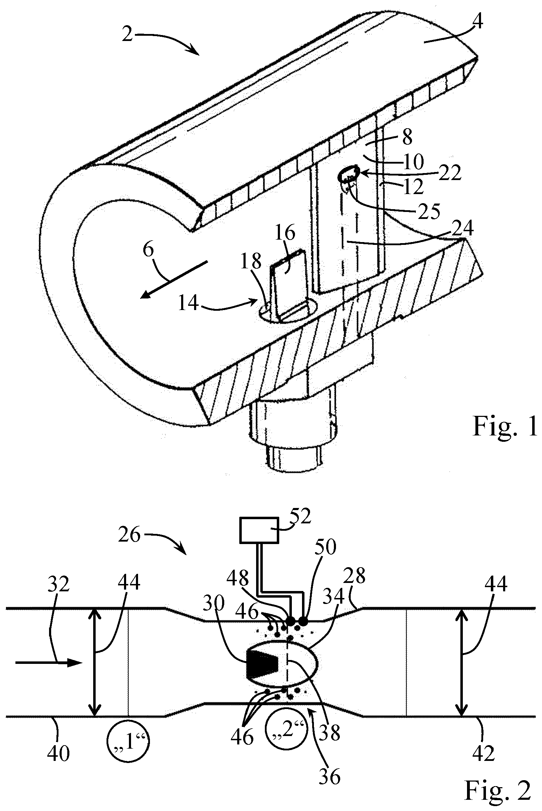

In Fig. 1 ist schematisch ein Wirbelströmungsmessgerät 2 in perspektivischer Ansicht dargestellt. Das Wirbelströmungsmessgerät 2 weist ein Messrohr 4 auf, das in Fig. 1 in teilweise aufgeschnittener Darstellung gezeigt ist. Im Einsatz wird das Messrohr 4 derart in eine (nicht dargestellte) Rohrleitung eingesetzt, so dass es von dem, in der Rohrleitung strömenden Medium in einer Strömungsrichtung 6 durchströmt wird. Das Wirbelströmungsmessgerät 2 weist einen Staukörper 8 auf, der sich in dem Messrohr 4 quer zu der Strömungsrichtung 6 derart erstreckt, dass beidseitig von dem Staukörper jeweils ein Strömungspfad gebildet wird. Insbesondere erstreckt sich der Staukörper 8 in diametraler Richtung über den gesamten Innenquerschnitt des Messrohres 4. Der Staukörper 8 ist dabei derart ausgebildet, dass er auf der Seite (in Fig. 1 verdeckt), die der Strömung zugewandt ist, eine Prallfläche aufweist, die von dem jeweiligen Medium angeströmt wird. Beidseitig der Prallfläche grenzt jeweils eine Seitenfläche 10 an, wobei sich die beiden Seitenflächen 10 entlang der Strömungsrichtung 6 verjüngen, so dass der Staukörper 8 einen, im Wesentlichen Δ-förmigen Querschnitt aufweist. Beidseitig der Prallfläche ist jeweils eine Abrisskante 12 (in Fig. 1 ist nur eine der beiden Abrisskanten 12 sichtbar) vorgesehen, die den Übergang zu den beiden Seitenflächen 10 bilden. Wie anhand der Fig. 1 ersichtlich ist, kann das jeweilige Medium beidseitig des Staukörpers 8 vorbeiströmen, wobei sich, wie oberhalb erläutert wird, wechselseitig an den beiden Abrisskanten 12 jeweils Wirbel ablösen. Dementsprechend bildet sich im Einsatz in dem Bereich hinter den beiden Abrisskanten 12 eine Kärmän'sche Wirbelstraße aus.

Das Wirbelströmungsmessgerät 2 weist ferner einen, stromabwärts von dem Staukörper 8 angeordneten Wirbelsensor 14 auf. Der Wirbelsensor 14 weist in dem vorliegenden Ausführungsbeispiel ein Paddel 16 auf, das sich durch eine, in dem Messrohr 4 ausgebildete Bohrung 18 in den Strömungspfad erstreckt. Dabei ist das Paddel 16 in einer Ruhestellung parallel zu dem Staukörper 8 und fluchtend zu diesem angeordnet. Das Paddel 16 ist in einer Richtung senkrecht zu der Strömungsrichtung 6 und senkrecht zu der Erstreckungsrichtung des Paddels 16 schwenkbar. Dementsprechend wird das Paddel 16 im Einsatz aufgrund auftretender Druckschwankungen, insbesondere aufgrund der gebildeten Wirbel, hin- und herbewegt. Die Schwenkbewegungen des Paddels 16 werden mittels eines entsprechenden Wirbelsensors in ein elektrisch verarbeitbares Messsignal umgewandelt. Der Wirbelsensor kann beispielsweise durch einen DSC-Sensor (DSC: Digital Switched Capacitor; deutsch: digital geschalteter Kondensator) gebildet werden. Bei diesem Sensortyp werden die Schwenkbewegungen des schwenkbaren Abschnittes mittels zweier elektrisch geschalteter Kapazitäten in differentielle elektrische Ladungsänderungen umgewandelt. Durch eine (nicht dargestellte) Elektronik des Wirbelströmungsmessgerätes 2 sind unter anderem die, von dem Wirbelsensor 14 bereitgestellten Sensorsignale auswertbar. Insbesondere kann durch die Elektronik die erfasste Wirbelfrequenz und aus dieser die Strömungsgeschwindigkeit (bzw. zusätzlich oder alternativ der Volumendurchfluss) bestimmt werden, was unterhalb noch im Detail erläutert wird. Daneben kann durch die Elektronik insbesondere die Bestimmung und/oder Auswertung von physikalischen Größen, die Auswertung von Sensorsignalen von weiteren Sensoren, die Durchführung einer drahtgebundenen oder einer drahtlosen Kommunikation, etc. durchgeführt werden.

In Fig. 1 ist ferner in gestrichelter Linienführung eine alternative Variante eines Wirbelsensors 22, der innerhalb des Staukörpers 8 ausgebildet ist, dargestellt. Bei dieser alternativen Variante ist innerhalb des Staukörpers 8 parallel zu der Erstreckungsrichtung des Staukörpers 8 eine Sackbohrung 24 zur Aufnahme des Wirbelsensors 22 vorgesehen. Diese Sackbohrung 24 weist mindestens eine Durchgangsöffnung 25 auf, die eine Fluid-Verbindung zwischen dem jeweiligen Medium innerhalb des Messrohres 4 und der Sackbohrung 24 herstellt. Dementsprechend kann ein, innerhalb der Sackbohrung 24 angeordneter Wirbelsensor 22 Druckschwankungen, die in dem Messrohr 4 stromabwärts der Abrisskanten 10 auftreten und insbesondere durch Wirbel hervorgerufen werden, erfassen und in ein elektrisch verarbeitbares Messsignal umwandeln.

In Fig. 2 ist eine schematische Querschnittansicht in axialer Richtung durch ein Messrohr 28 eines Wirbelströmungsmessgerätes 26 dargestellt. Nachfolgend wird im Wesentlichen auf die Details eingegangen, die für die Erläuterung des Auftretens eines Phasenübergangs im Bereich des Messquerschnitts maßgeblich sind. Innerhalb des Messrohres 28 ist ein Staukörper 30 angeordnet, der in Fig. 2 in Querschnittansicht senkrecht zu dessen Erstreckungsrichtung dargestellt ist. Der Staukörper 30 weist einen, im Wesentlichen trapezförmigen Querschnitt auf, wobei dessen größere Seitenfläche der Strömung zugewandt ist (vgl. Strömungsrichtung 32 in Fig. 2). Hinter dem Staukörper 30 bildet sich ein Totwassergebiet 34 aus, das im Querschnitt im Wesentlichen die Form einer Ellipse aufweist und in Fig. 2 schematisch dargestellt ist. Der Bereich des Staukörpers 30 und des sich daran anschließenden Totwassergebiets 34 wird als Messquerschnitt 36 bezeichnet, dessen Zentrum 38 (bezüglich der Strömungsrichtung 32) in Fig. 2 in gestrichelter Linie dargestellt ist. In dem Bereich des Zentrums 38 wird insbesondere dann, wenn der (in Fig. 2 nicht dargestellte) Wirbelsensor separat von dem Staukörper 30, wie beispielsweise als Paddel, ausgebildet ist, die Strömungsgeschwindigkeit gemessen. In dem Bereich des Messquerschnitts 36 ist der Strömungsquerschnitt für das strömende Medium reduziert. Dieser Effekt wird zusätzlich dadurch verstärkt, dass auch das Messrohr 28 um den Bereich des Messquerschnitts 36 herum (bezüglich der Strömungsrichtung) verjüngt ist gegenüber den, sich beidseitig anschließenden Anschlussrohren 40, 42, die jeweils einen Anschlussrohrquerschnitt 44 aufweisen. Weiterhin weist das Wirbelströmungsmessgerät 26 im Bereich des Messquerschnitts 36 einen Temperatursensor 48 zur Erfassung der statischen Temperatur des Mediums (im Bereich des Messquerschnitts 36) sowie einen Drucksensor 50 zur Erfassung des statischen Drucks des Mediums (im Bereich des Messquerschnitts 36) auf. Der Temperatursensor 48 und der Drucksensor 50 sind jeweils mit einer Elektronik 52 des Wirbelströmungsmessgerätes 26 verbunden.

Strömt beispielsweise feuchte Luft (Medium) durch eine Rohrleitung, in der das Wirbelströmungsmessgerät 26 eingesetzt ist, so kann die feuchte Luft im Bereich der Rohrleitung vollständig gasförmig sein, so dass nur eine Phase vorliegt. Im Bereich des Messquerschnitts 36 erhöht sich aufgrund des reduzierten Strömungsquerschnitts die Strömungsgeschwindigkeit des Mediums, was zu einer Absenkung von dessen Temperatur und dessen Druck führt. Bei diesen Prozessbedingungen im Bereich des Messquerschnitts 36 kann folglich die Phasengrenze gasförmig-flüssig (alternativ: gasförmig-fest) für den, in der feuchten Luft enthaltenen Wasserdampf überschritten werden, so dass das, in der feuchten Luft enthaltene Wasser zumindest teilweise auskondensiert (bzw. alternativ ausfriert). Dies ist in Fig. 2 schematisch durch die Tröpfchen 46 im Bereich des Messquerschnitts 36 dargestellt. Nach dem Messquerschnitt 36, nachdem sich der Strömungsquerschnitt wieder erhöht hat, verdampft das Wasser wieder und die Tröpfchen 46 lösen sich wieder auf. Die Dichte des Mediums (hier: feuchte Luft) weicht folglich im Bereich des Messquerschnitts 36 von dessen Dichte im Anschlussrohrbereich 40, 42 ab.

Alternativ können die Prozessbedingungen bereits in der Rohrleitung derart sein, dass ein Teil des, in der feuchten Luft enthaltenen Wassersdampfs auskondensiert ist (bzw. alternativ ausgefroren ist) und in flüssiger (bzw. alternativ: fester) Phase (insbesondere als Tröpfchen) mitgeführt wird. Aufgrund des reduzierten Strömungsquerschnitts im Bereich des Messquerschnitts 36 kondensiert (bzw. alternativ: friert) in diesem Bereich ein zusätzlicher Anteil des, in der feuchten Luft enthaltenen Wasserdampfs aus. Nach dem Messquerschnitt 36, nachdem sich der Strömungsquerschnitt wieder erhöht hat, verdampft der zusätzliche Anteil wieder und es stellt sich im Wesentlichen wieder das Gleichgewicht zwischen Wasser und Wasserdampf ein, wie es in dem stromaufwärtigen Anschlussrohrbereich 40 vorgelegen hat. Auch hier weicht die Dichte des Mediums (hier: feuchte Luft) im Bereich des Messquerschnitts 36 von dessen Dichte im Anschlussrohrbereich 40, 42 ab. Im Falle von feuchter Luft, die mehrere, unterschiedliche Stoffe aufweist ($O_2$, $N_2$, $CO_2$, $H_2O$, etc.), und allgemein im Falle von Medien, die mehrere, unterschiedliche Stoffe aufweisen, sind bei der Anwendung des erfindungsgemäßen Verfahrens vorzugsweise die Prozessbedingungen im Anschlussrohrbereich 40, 42 und in dem Bereich des Messquerschnitts 36 derart, dass maximal ein enthaltener Stoff in zwei Phasen vorliegt (bzw. gegebenenfalls das Auftreten eines Phasenübergangs von weiteren, in zwei Phasen vorliegenden Stoffen vernachlässigt werden kann). Alternativ kann aber auch der Fall auftreten, dass das Medium aus nur einem Stoff (z.B. $H_2O$) gebildet wird, der bei einer Variante im Anschlussrohrbereich 40, 42 in nur einer Phase (insbesondere gasförmig) vorliegt und bei dem im Bereich des Messquerschnitts 36 ein Anteil auskondensiert (d.h. gasförmig-flüssiges Phasengemisch) oder ausfriert (d.h. gasförmig-festes Phasengemisch). Bei einer weiteren Variante kann bei dem Medium aus nur einem Stoff bereits im Anschlussrohrbereich 40, 42 ein Teil desselben auskondensiert oder ausgefroren sein, wobei dieser Anteil dann im Bereich des Messquerschnitts 36 erhöht ist.

Nachfolgend werden Ausführungsformen des erfindungsgemäßen Verfahrens und die Herleitung der jeweils relevanten, physikalischen Formeln erläutert. Wie in dem Fachgebiet bekannt ist, kann ein Strömungsfeld durch die Navier-Stokes-Gleichungen beschrieben werden. Für ein stationäres Kontrollvolumen lauten die Navier-Stokes-Gleichungen in integraler Form wie folgt, wobei durch die Gleichung (1) die Massenerhaltung, durch Gleichung (2) die Impulserhaltung und durch Gleichung (3) die Energieerhaltung ausgedrückt werden.

$$(1) \qquad \frac{\partial}{\partial t} \int_V \rho \, dV + \int_S \rho \, \vec{u} \cdot \vec{n} \, dS = 0$$

$$(2) \qquad \frac{\partial}{\partial t} \int_V \rho \, \vec{u} \, dV + \int_S \left( \rho \, \vec{u}\,\vec{u} \right)\vec{n} \, dS = -\int_S p \, \vec{n} \, dS + \int_V \rho \, \vec{B} \, dV + \int_S \tau \, \vec{n} \, dS$$

$$(3) \qquad \frac{\partial}{\partial t} \int_V \rho \left( e + \frac{u^2}{2} \right) dV + \int_S \rho \left( e + \frac{u^2}{2} \right) \vec{u} \cdot \vec{n} \, dS =$$
$$-\int_S p \, \vec{u} \cdot \vec{n} \, dS + \int_V \rho \, \vec{B} \cdot \vec{u} \, dV + \int_S \tau \, \vec{u} \cdot \vec{n} \, dS - \int_S \vec{q} \cdot \vec{n} \, dS + \int_V \rho \, Q \, dV$$

Dabei sind t die Zeit, V das ortsfeste Kontrollvolumen, p die Dichte, S die Grenzfläche des ortsfesten Kontroll-

volumens, $\vec{u}$ der Geschwindigkeitsvektor, $\vec{n}$ der Normalenvektor der Grenzfläche, p der Druck, $\vec{B}$ die spezifische Körperkraft, u der Geschwindigkeitsbetrag, $\tau$ der viskose Spannungstensor, e die spezifische, innere Energie, $\vec{q}$ der Wärmestromvektor und Q die spezifische, volumetrische Energiezufuhr.

Mit der Annahme, dass die Strömung stationär ist, ergibt sich aus der Massenerhaltung (vgl. Gleichung (1)):

$$(4) \qquad \int_S \rho\, \vec{u} \cdot \vec{n}\, dS = 0$$

Dies bedeutet anschaulich, dass der Massenstrom in das Kontrollvolumen hinein (in Gleichung (5) durch den Index 1 ausgedrückt) gleich dem Massenstrom aus dem Kontrollvolumen hinaus (in Gleichung (5) durch den Index 2 ausgedrückt) ist. Dieser Zusammenhang wird in der nachfolgenden Gleichung (5) ausgedrückt. Dies kann anhand der Fig. 2 veranschaulicht werden, in der eine Position "1" im Bereich des stromaufwärtigen Anschlussrohres 40 durch die "1" im Kreis veranschaulicht ist, an der eine Strömungsgeschwindigkeit $u_1$, eine Dichte $\rho_1$ und ein Strömungsquerschnitt $A_1$ vorliegt. Ferner ist in Fig. 2 eine Position "2" im Bereich des Zentrums 38 des Messquerschnitts 36 durch die "2" im Kreis veranschaulicht, an der eine Strömungsgeschwindigkeit $u_2$, eine Dichte $\rho_2$ und ein Strömungsquerschnitt $A_2$ vorliegt. Das Kontrollvolumen bildet bei diesem Anschauungsbeispiel beispielsweise das, zwischen den Positionen "1" und "2" sowie durch das Messrohr 28 eingeschlossene Volumen, wobei das Volumen des Staukörpers 30 und das Volumen des Totwassergebiets 34 ausgenommen sind.

$$(5) \qquad \rho_1\, u_1\, A_1 = \rho_2\, u_2\, A_2$$

In allgemeiner Form bedeutet dies, dass der, durch die nachfolgende Gleichung (6) ausgedrückte Massenstrom bzw. Massedurchfluss einer stationären Strömung in einem Rohr konstant ist. Dabei sind in Gleichung (6) $\dot{m}$ der Massedurchfluss, $\rho$ die Dichte, u die mittlere Strömungsgeschwindigkeit und A der verfügbare Strömungsquerschnitt. Insbesondere ändert sich der Massedurchfluss nicht entlang des Strömungspfades des Mediums. Dieses Prinzip wird bei dem erfindungsgemäßen Verfahren ausgenützt, wie unterhalb noch im Detail erläutert wird. Gemäß dem erfindungsgemäßen Verfahren wird nämlich der Massedurchfluss im Bereich des Messquerschnitts korrekt anhand der lokal, im Bereich des Messquerschnitts vorliegenden Prozessbedingungen bestimmt. Dieser Massedurchfluss liegt (bei Annahme einer stationären Strömung) an jeder Stelle entlang des Strömungspfades vor, unabhängig von etwaig auftretenden Dichteänderungen des strömenden Mediums.

$$(6) \qquad \dot{m} = \rho\, u\, A$$

Bei inkompressiblen Medien, wie beispielsweise bei Flüssigkeiten, gestaltet sich die Bestimmung des, im Anschlussrohrbereich vorliegenden Volumenstroms $\dot{V}_A$ durch ein Wirbelströmungsmessgerät relativ einfach. Die sensorisch erfassbare Wirbelablösefrequenz f der, durch den Staukörper gebildeten Wirbel ist über einen weiten Reynoldszahlbereich proportional zu der lokal, im Bereich des Messquerschnitts vorliegenden Strömungsgeschwindigkeit sowie zu dem lokal, im Bereich des Messquerschnitts vorliegenden Volumendurchfluss. Da bei inkompressiblen Medien die Dichte des Mediums entlang von dessen Strömungspfad konstant bleibt, ist die Wirbelablösefrequenz auch proportional zu dem Volumendurchfluss $\dot{V}_A$ im Anschlussrohrbereich sowie zu der Strömungsgeschwindigkeit $u_A$ im Anschlussrohrbereich, was durch einen entsprechenden Kalibrierfaktor $k_f$ ausgedrückt werden kann. Der Kalibrierfaktor $k_f$ ist dabei insbesondere spezifisch für den jeweiligen Typ von Wirbelströmungsmessgerät. Die erläuterten Beziehungen werden durch die nachfolgende Gleichung (7) ausgedrückt, in der mit $A_A$ der Strömungsquerschnitt im Anschlussrohrbereich bezeichnet wird:

$$(7) \qquad \dot{V}_A = u_A\, A_A = \frac{f}{k_f}$$

Bei kompressiblen Medien hingehen ist die Dichte $\rho$ eine Funktion des lokalen, statischen Drucks p und der statischen Temperatur T, was durch die nachfolgende Gleichung (8) ausgedrückt wird:

$$(8) \qquad \rho = \rho(p, T)$$

Bei einem ausschließlich gasförmig (d.h. einphasig) vorliegenden Medium kann die Abhängigkeit der Dichte von dem Druck und der statischen Temperatur relativ einfach bestimmt werden. Liegen die Prozessbedingungen im Bereich des Messquerschnitts jedoch in einem Bereich des Phasenübergangs von einem, in dem Medium enthaltenen Stoff, so wird die Dichte des Mediums zusätzlich dadurch bestimmt, zu welchen Anteilen der Stoff in den verschiedenen Phasen vorliegt. Dabei durchläuft nicht der gesamte Anteil des Stoffes schlagartig sondern allmählich solch einen Phasenübergang. Bei einem Phasenübergang wird jeweils eine Phasenübergangs-Enthalpie des betreffenden Phasenübergangs, wie beispielsweise eine Kondensationsenthalpie, frei bzw. aufgenommen.

Aufgrund von dessen Funktionsweise kann durch das Wirbelströmungsmessgerät auch dann, wenn das Medium in zwei oder mehr Phasen vorliegt, relativ exakt die im Bereich des Messquerschnitts vorliegende Strömungsgeschwindigkeit u des Mediums (bzw. entsprechend auch dessen Volumendurchfluss) bestimmt werden. Aufgrund der hohen Dichteunterschiede zwischen flüssiger (bzw. alternativ: fester) und gasförmiger Phase nimmt selbst dann, wenn die flüssige (bzw. alternativ auch die feste) Phase einen erheblichen Massenanteil ausmacht, die gasförmige Phase den überwiegenden Anteil des Volumens ein. Vorzugsweise ist der Massenanteil $x_g$ der gasförmigen Phase > 0,5.

Für die Bestimmung des Massedurchflusses muss die Dichte lokal im Bereich des Messquerschnitts möglichst exakt bestimmt werden. Die Bestimmung der Dichte des Mediums im Bereich des Messquerschnitts wird nachfolgend anhand des Phasenübergangs gasförmig-flüssig erläutert. Die Dichte wird bei sämtlichen erläuterten Ausführungsformen, wie nachfolgend im Detail erläutert wird, aus der spezifischen, totalen Enthalpie, aus der Strömungsgeschwindigkeit, aus dem statischen Druck und aus der statischen Temperatur bestimmt, wobei bei sämtlichen, physikalischen Größen auf den Bereich des Messquerschnitts Bezug genommen wird. Dabei wird die Dichte im Bereich des Messquerschnitts aus dem ersten Massenanteil des Stoffes (z.B. $H_2O$) in der ersten (z.B. gasförmigen) Phase und dessen Dichte $\rho_g$ im Bereich des Messquerschnitts. dem zweiten Massenanteil des Stoffes in der zweiten (z.B. flüssigen) Phase und dessen Dichte $\rho_l$ im Bereich des Messquerschnitts sowie gegebenenfalls von weiteren, in dem Medium enthaltenen Stoffen (z.B. trockene Luft) in deren jeweiliger (z.B. gasförmiger) Phase und deren jeweiliger Dichten $\rho_r$ im Bereich des Messquerschnitts bestimmt. Wird das Medium durch genau einen Stoff (z.B. $H_2O$) gebildet, der bei den Prozessbedingungen sowohl in gasförmiger als auch in flüssiger Phase vorliegen kann, so kann die Dichte $\rho$ des Mediums im Bereich des Messquerschnitts als Funktion des statischen Drucks p im Bereich des Messquerschnitts, der statischen Temperatur im Bereich des Messquerschnitts und dem Massenanteil der gasförmigen Phase $x_g$ ausgedrückt werden. Dieser Zusammenhang ist in der nachfolgenden Gleichung (9) dargestellt, wobei $\rho_g(p, T)$ die Dichte der gasförmigen Phase dieses Stoffes in Abhängigkeit von dem statischen Druck p und der statischen Temperatur T und $\rho_l(p, T)$ die Dichte der flüssigen Phase dieses Stoffes in Abhängigkeit von dem statischen Druck p und der statischen Temperatur T bilden. Die Druck- und Temperaturabhängigkeit der Dichte der jeweiligen Phase des jeweiligen Stoffes ist dabei bekannt (beispielsweise aus entsprechenden Korrelationen für den betreffenden Stoff erhältlich).

$$(9) \qquad \rho = \rho\big(p, T, x_g\big) = \frac{1}{\dfrac{x_g}{\rho_g\big(p,T\big)} + \dfrac{1 - x_g}{\rho_l\big(p,T\big)}}$$

Wird das Medium (z.B. feuchte Luft) aus mehreren Stoffen gebildet und weist es (genau) einen Stoff (z.B. $H_2O$) auf, der zumindest bei einem Teil der möglichen Prozessbedingungen im Bereich des Messquerschnitts in zwei Phasen, vorliegend in der gasförmigen und der flüssigen Phase, vorliegt, so kann die Dichte $\rho$ des Mediums im Bereich des Messquerschnitts als Funktion des statischen Drucks p im Bereich des Messquerschnitts, der statischen Temperatur im Bereich des Messquerschnitts, dem als bekannt vorausgesetzten Massenanteil x dieses Stoffes (Gesamtmasse des Stoffes relativ zu der Gesamtmasse des Mediums) und dem Massenanteil der gasförmigen Phase $x_g$ (Gesamtmasse des Stoffes in der gasförmigen Phase relativ zu der Gesamtmasse des Stoffes) im Bereich des Messquerschnitts entsprechend ausgedrückt werden. Dieser Zusammenhang ist in der nachfolgenden Gleichung (10) dargestellt, wobei $\rho_r(p, T)$ die Dichte des restlichen, gasförmigen Mediums (z.B. trockene Luft) in Abhängigkeit von dem statischen Druck p und der statischen Temperatur T ist (diese Funktion der Dichte $\rho_r$ ist bekannt):

$$(10) \qquad \rho = \rho\big(p, T, x, x_g\big) = \frac{1}{x\left(\dfrac{x_g}{\rho_g\big(p,T\big)} + \dfrac{1 - x_g}{\rho_l\big(p,T\big)}\right) + \dfrac{1 - x}{\rho_r\big(p,T\big)}}$$

Wie anhand der Gleichungen (9) und (10) ersichtlich ist, kann die Dichte $\rho$ des Mediums (z.B. feuchte Luft) im Bereich des Messquerschnitts aus dem ersten Massenanteil $x \cdot x_g$ des Stoffes (z.B. $H_2O$) in einer ersten (hier: gasförmigen) Phase und dessen Dichte $\rho_g$ im Bereich des Messquerschnitts, dem zweiten Massenanteil $x*(1-x_g)$ des Stoffes in einer zweiten (hier: flüssigen) Phase und dessen Dichte $\rho_l$ im Bereich des Messquerschnitts sowie gegebenenfalls weiterer Massenanteile $(1-x)$ von weiteren, in dem Medium enthaltenen Stoffen (z.B. trockene Luft) in deren jeweiliger Phase (hier: gasförmig) und deren jeweiliger Dichten $\rho_r$ im Bereich des Messquerschnitts ausgedrückt werden. Zur korrekten Bestimmung der Dichte $\rho$ des Mediums muss folglich der Massenanteil der gasförmigen Phase $x_g$ bestimmt werden. Hierzu wird Gleichung (3) herangezogen, welche eine der Navier-Stokes-Gleichungen bildet und die Energieerhaltung ausdrückt. Unter den vereinfachenden Annahmen, dass eine stationäre Strömung vorliegt, dass keine Wärmequellen existieren, dass kein Wärmestrom zu bzw. von dem Medium weg auftritt, dass keine Reibung auftritt und dass keine Änderung der potentiellen Energie auftritt, sind der erste sowie der vierte bis siebte Term der Gleichung (3) jeweils gleich Null. Dementsprechend ergibt sich für die Energieerhaltung nachfolgende Gleichung (11):

$$(11) \quad \int_S \rho \left( e + \frac{u^2}{2} \right) \vec{u} \cdot \vec{n}\, dS + \int_S p \cdot \vec{u} \cdot \vec{n}\, dS = 0$$

$$\int_S \rho \left( h + \frac{u^2}{2} \right) \vec{u} \cdot \vec{n}\, dS = \int_S \rho \cdot h_0 \cdot \vec{u} \cdot \vec{n}\, dS = 0$$

Dabei ist in Gleichung (11) $h$ die spezifische Enthalpie, die sich, wie in Gleichung (12) angegeben ist, ausdrücken lässt. Weiterhin ist $h_0$ die spezifische, totale Enthalpie des Mediums, die sich, wie in Gleichung (13) angegeben ist, ausdrücken lässt.

$$(12) \quad h = e + \frac{p}{\rho}$$

$$(13) \quad h_0 = h + \frac{u^2}{2}$$

In Bezug auf das oberhalb erläuterte Kontrollvolumen gilt dementsprechend, dass der Strom der spezifischen, totalen Enthalpie in das Kontrollvolumen hinein (in Gleichung (14) durch den Index 1 ausgedrückt) gleich dem Strom der spezifischen, totalen Enthalpie aus dem Kontrollvolumen hinaus (in Gleichung (14) durch den Index 2 ausgedrückt) ist, was nachfolgend in Gleichung (14) ausgedrückt wird. Zusammen mit Gleichung (5) ergibt sich aus Gleichung (14) allgemein, dass der Strom der spezifischen, totalen Enthalpie $h_0$ unter den oberhalb getroffenen (vereinfachenden) Annahmen konstant ist, was nachfolgend durch Gleichung (15) ausgedrückt wird.

$$(14) \quad A_1\, \rho_1\, u_1 \left( h_1 + \frac{u_1^2}{2} \right) = A_2\, \rho_2\, u_2 \left( h_2 + \frac{u_2^2}{2} \right)$$

$$(15) \quad h_1 + \frac{u_1^2}{2} = h_2 + \frac{u_2^2}{2} = h_0 = const$$

Die spezifische, totale Enthalpie des Mediums kann ferner durch die Summe der kinetischen Energie des Mediums im Bereich des Messquerschnitts, der spezifischen Enthalpie $h_g(p, T)$ von dem Stoff (z.B. $H_2O$) in der ersten (z.B. gasförmigen) Phase im Bereich des Messquerschnitts mal den ersten Massenanteil des Stoffes in der ersten Phase, der spezifischen Enthalpie $h_l(p, T)$ von dem Stoff in der zweiten (z.B. flüssigen) Phase im Bereich des Messquerschnitts mal den zweiten Massenanteil des Stoffes in der zweiten Phase und gegebenenfalls weiterer, spezifischer Enthalpien $h_r(p, T)$ von weiteren, in dem Medium enthaltenen Stoffen (z.B. trockene Luft) in deren jeweiliger Phase (insbesondere gasförmig) mal deren jeweiligen Massenanteilen ausgedrückt werden. Wird das Medium aus ausschließlich einem Stoff (z.B. $H_2O$), der zumindest bei einem Teil der möglichen Prozessbedingungen in zwei Phasen vorliegt, gebildet, so ergibt sich für die angegebene Beziehung die Gleichung (16). Wird das Medium (z.B. feuchte Luft) aus mehreren Stoffen gebildet und weist es (genau) einen Stoff (z.B. $H_2O$) auf, der zumindest bei einem Teil der möglichen Prozessbedingungen im Bereich des Messquerschnitts in zwei Phasen, vorliegend in der gasförmigen und der flüssigen Phase, vorliegt, so ergibt sich für die angegebene Beziehung die Gleichung (18). Werden diese Gleichungen (16) bzw. (18) nach dem Massenanteil des Stoffes (z.B. $H_2O$) in der ersten (z.B. gasförmigen) Phase aufgelöst, so ergeben sich die Gleichungen (17) bzw. (19).

$$(16) \quad h_0 = \left( \frac{1}{2}u^2 + x_g\, h_g\,(p,T) + (1 - x_g)h_l\,(p,T) \right)$$

$$(17) \quad x_g = \frac{h_0 - \frac{1}{2}u^2 - h_l\,(p,T)}{h_g\,(p,T) - h_l\,(p,T)}$$

$$(18) \quad h_0 = \frac{1}{2}u^2 + x\, x_g\, h_g\,(p,T) + x(1 - x_g)h_l\,(p,T) + (1 - x)h_r\,(p,T)$$

$$(19) \quad x_g = \frac{\dfrac{h_0 - \frac{1}{2}u^2}{x} - h_l\,(p,T) - \dfrac{1 - x}{x}h_r\,(p,T)}{h_g\,(p,T) - h_l\,(p,T)}$$

Dabei können die spezifischen Enthalpie $h_g(p,T)$ des Stoffes (z.B. $H_2O$) in der ersten (z.B. gasförmigen) Phase, die spezifische Enthalpie $h_l(p,T)$ des Stoffes in der zweiten (z.B. flüssigen) Phase sowie die spezifische Enthalpie $h_r(p,T)$ von weiteren, in dem Medium enthaltenen Stoffen (z.B. trockene Luft) anhand der, im Bereich des Messquerschnitts vorliegenden Werte für die statische Temperatur T und den statischen Druck p anhand von Korrelationen, die für die verschiedenen Stoffe existieren, bestimmt werden. Um den Massenanteil des Stoffes (z.B. $H_2O$) in der ersten (z.B. gasförmigen) Phase bestimmen zu können, muss folglich noch die spezifische, totale Enthalpie $h_0$ des Mediums in dem Bereich des Messquerschnitts bestimmt werden. Möglichkeiten hierzu werden nachfolgend erläutert.

Wie oberhalb unter Bezugnahme auf die Gleichungen (14) und (15) erläutert wird, ist unter Voraussetzung der oberhalb getroffenen, vereinfachenden Annahmen der Strom der spezifischen, totalen Enthalpie $h_0$ entlang dem Strömungspfad des Mediums konstant. Wird das Medium aus einem (zumindest weitgehend im thermodynamischen Gleichgewicht befindlichen) System entnommen, in dem das Medium vor dessen Entnahme ruht, so kann die spezifische, totale Enthalpie $h_0$ des strömenden Mediums im Bereich des Messquerschnitts aus dem statischen (bzw. totalen) Druck $p_0$ und der statischen (bzw. totalen) Temperatur $T_0$, die das Medium innerhalb dieses Systems aufweist, bestimmt werden. Das System kann beispielsweise durch einen Dampfkessel mit einem bekannten Dampfkesseldruck und einer bekannten Dampfkesseltemperatur gebildet werden. Alternativ kann das System für den Fall, dass durch die betreffende Rohrleitung Umgebungsluft angesaugt wird, durch den Umgebungsdruck und die Umgebungstemperatur charakterisiert werden. Das Medium liegt in dem System insbesondere vollständig gasförmig vor. Die spezifische, totale Enthalpie $h_0$ entspricht in dem System, in dem das betreffende Medium ruht (und in einem thermodynamischen Gleichgewicht vorliegt), der spezifischen Enthalpie $h(p_0, T_0)$. Die spezifische Enthalpie $h(p_0, T_0)$ kann für den jeweiligen Stoff in dessen jeweiliger Phase anhand bekannter Korrelationen aus dem (statischen bzw. totalen) Druck $p_0$ und der (statischen bzw. totalen) Temperatur $T_0$ des Mediums in dem System bestimmt werden. Setzt sich das Medium aus mehreren Stoffen (Elemente, wie z.B. $O_2$, oder Verbindungen, wie z.B. $H_2O$) mit jeweils bekannten Massenanteilen zusammen, so kann die spezifische Enthalpie $h(p_0, T_0)$ des Mediums in dem System jeweils separat für die verschiedenen Stoffe in deren jeweiliger Phase (aus dem statischen Druck $p_0$ und der statischen Temperatur $T_0$) bestimmt werden. Anhand der jeweiligen Massenanteile der verschiedenen Stoffe in dem System kann dann die spezifischen Enthalpie $h(p_0, T_0)$ für das gesamte Medium bestimmt werden. In dem Bereich des Messquerschnitts setzt sich die spezifische, totale Enthalpie $h_0$ des Mediums aus der spezifischen Enthalpie $h(p, T)$ und der spezifischen, kinetischen Energie $u^2/2$ zusammen. Dieser Zusammenhang ist in der nachfolgenden Gleichung (20) ausgedrückt.

$$(20) \quad h_0 \equiv h(p,T) + \frac{u^2}{2}$$
$$= h(p_0, T_0)$$

Findet ein Wärmeübergang auf das Medium entlang von dessen Strömungspfad statt, so kann die spezifische, totale Enthalpie $h_{0,b}$ des Mediums im Bereich des Messquerschnitts auch aus einer bekannten, spezifischen, totalen Enthalpie $h_{0,a}$ des Mediums in einem stromaufwärts oder stromabwärts von dem Messquerschnitt gelegenen Abschnitt unter Berücksichtigung eines Wärmeübergangs auf das strömende Medium von dem Abschnitt (Index a) bis zu dem Messquerschnitt (Index b) bestimmt werden. Diese Variante wird durch die nachfolgende Gleichung (21) ausgedrückt, wobei der Term $\int_a^b \vec{q} \cdot \vec{n} \, dS$ die Wärmeströme über die jeweiligen Systemgrenzen ausdrückt, Qa-b den Gesamt-Wärmeübergang (auf das strömende Medium von dem betreffenden Abschnitt a bis zu dem Messquerschnitt b) bezeichnet, und $\dot{m}$ der Massedurchfluss des Mediums ist. Wie anhand der Gleichung (21) ersichtlich ist, können in entsprechender Weise auch weitere Energieübertragungen auf das strömende Medium berücksichtigt werden, indem entsprechende, zusätzliche Terme in die Gleichung (21) aufgenommen werden.

$$(21) \quad \dot{m}\,h_{0,a} = \dot{m}\,h_{0,b} - \int_a^b \vec{q} \cdot \vec{n} \, dS = \dot{m}\,h_{0,b} - Q_{a-b}$$
$$h_{0,a} = h_{0,b} - \frac{Q_{a-b}}{\dot{m}}$$

In Gleichung (21) geht auch der Massedurchfluss des Mediums ein, dessen genaue Bestimmung gerade Gegenstand des erfindungsgemäßen Verfahrens ist. Diese Problematik wird gemäss der Erfindung iterativ gelöst. Hierzu kann insbesondere zunächst die bekannte spezifische, totale Enthalpie $h_{0,a}$, die in dem Abschnitt (Index a) vorliegt, als spezifische, totale Enthalpie des Mediums in dem Bereich des Messquerschnitts eingesetzt werden (z.B. in Gleichung (17) oder (19)). Daraus wird dann nach dem erfindungsgemäßen Verfahren der Massedurchfluss bestimmt (wie es unterhalb noch im Detail erläutert wird). Der ermittelte Massedurchfluss kann dann wiederum in Gleichung (21) eingesetzt werden. Daraus wird dann die spezifische, totale Enthalpie $h_{0,b}$ im Bereich des Messquerschnitts nach Gleichung (21) bestimmt. Diese kann dann wiederum als spezifische Enthalpie des Mediums im Bereich des Messquerschnitts zur Bestimmung des Massedurchflusses nach dem erfindungsgemäßen Verfahren herangezogen werden. Dabei können so viele Iterationen durchgeführt werden, bis ein ausreichend korrektes Ergebnis erhalten wird bzw. bis sich die erhaltenen Werte für den Massedurchfluss nur noch in geringem Maß von Iteration zu Iteration ändern.

Ferner besteht in Bezug auf Gleichung (21) die Möglichkeit, dass für die bekannte, spezifische, totale Enthalpie $h_{0,a}$ des Mediums dann, wenn das Medium aus einem ruhenden System, wie es oberhalb beschrieben ist, entnommen wird, durch die spezifische, totale Enthalpie des Mediums in diesem System gebildet wird (vgl. Gleichung (20)). Durch Anwendung der Gleichung (21) kann dann ein Wärmeübergang auf das strömende Medium auf dem Weg von dem System bis zu dem Messquerschnitt berücksichtigt werden.

Die nach dem Verfahren nach Gleichung (20) und/oder nach dem Verfahren nach Gleichung (21) erhaltene, spezifische, totale Enthalpie $h_0$ des Mediums in dem Bereich des Messquerschnitts kann dann in die Gleichung (17) bzw. (19) eingesetzt werden. Daraus kann dann der Masseanteil $x_g$ des Stoffes (z.B. $H_2O$) in der ersten Phase im Bereich des Messquerschnitts berechnet werden. Der Masseanteil $x_g$ kann dann wiederum in die Gleichung (9) bzw. (10) eingesetzt werden. Daraus kann dann die Dichte des Mediums im Bereich des Messquerschnitts bestimmt werden. Der Massedurchfluss wird anschließend gemäß Gleichung (6) aus der bestimmten Strömungsgeschwindigkeit u des Mediums im Bereich des Messquerschnitts, der bestimmten Dichte $\rho$ des Mediums im Bereich des Messquerschnitts und aus dem Strömungsquerschnitt A des Mediums im Bereich des Messquerschnitts bestimmt.

Soll der Volumendurchfluss des Mediums im Anschlussrohrbereich bestimmt werden, so ist der gemäß Gleichung (6) erhaltene Massedurchfluss noch durch die Dichte des Mediums, die im Anschlussrohrbereich vorliegt, (vgl. z.B. $\rho_1$ in Fig. 2) zu teilen. Diese Dichte ist wiederum eine Funktion des statischen Drucks und der statischen Temperatur im Anschlussrohrbereich. Sofern die Dichte nicht bekannt ist, muss sie bestimmt werden. Liegt das Medium ausschließlich gasförmig vor, so kann die Dichte einfach als Funktion des statischen Drucks und der statischen Temperatur, die jeweils im Anschlussrohrbereich vorliegen, bestimmt werden. Liegt hingegen auch im Anschlussrohrbereich ein Stoff in zwei Phasen vor, so ist die Bestimmung der Dichte nicht ohne weiteres möglich. Hier könnte beispielsweise entsprechend, wie dies für die Dichte im Bereich des Messquerschnitts beschrieben wurde, auch lokal im Anschlussrohrbereich die Strömungsgeschwindigkeit und die spezifische, totale Enthalpie des Mediums bestimmt werden. Aus diesen Größen könnte zusammen mit dem statischen Druck und der statischen Temperatur, die jeweils im Anschlussrohrbereich vorliegen, dann die Dichte im Anschlussrohrbereich bestimmt werden.

Die vorliegende Erfindung ist nicht auf die, unter Bezugnahme auf die Figuren erläuterten Ausführungsbeispiele beschränkt. Beispielsweise kann das Wirbelströmungsmessgerät auf verschiedene Weisen, wie es insbesondere aus dem Stand der Technik bekannt ist, aufgebaut sein. Insbesondere kann der grundsätzliche Aufbau einem Wirbelströmungsmessgerät entsprechen, wie es im einleitenden Teil erläutert wurde. Bezüglich der Anordnung und Ausbildung des Wirbelsensors sind verschiedene Varianten, wie beispielsweise die integrale Ausbildung in dem Staukörper oder die separate Ausbildung als Paddel, das stromabwärts von dem Staukörper angeordnet ist, möglich. Weiterhin sind unterschiedliche Formen des Staukörpers und unterschiedliche Ausbildungen der Abrisskanten möglich. Ferner können im Rahmen der Bestimmung der Dichte des Mediums im Bereich des Messquerschnitts auch weitere Effekte, wie beispielsweise Reibungseffekte, berücksichtigt werden. Wie dem Fachmann geläufig ist, kann dazu insbesondere auch noch die Gleichung (2), welche die Impulserhaltung betrifft, miteinbezogen werden.

Die oberhalb erläuterten Ausführungsbeispiele betrafen jeweils den Phasenübergang zwischen gasförmig und flüssig. Alternativ kann das erfindungsgemäße Verfahren entsprechend für den Phasenübergang zwischen gasförmig und fest realisiert werden. In letzterem Fall sind anstelle der druck- und temperaturabhängigen Dichte und druck- und temperaturabhängigen spezifischen Enthalpie des Stoffes in der flüssigen Phase die druck- und temperaturabhängige Dichte und die druck- und temperaturabhängige spezifische Enthalpie des Stoffes in der festen Phase heranzuziehen.

Weiterhin kann für den Fall, dass der statische Druck p nicht lokal an der betreffenden Stelle (z.B. im Bereich des Messquerschnitts; im Anschlussrohrbereich, etc.) gemessen werden kann, der statische Druck p gemäß der nachfolgenden Gleichung (22) berechnet werden:

$$(22) \quad \frac{p}{p_t} = \left(1 + \frac{1-\gamma}{2} M^2\right)^{\frac{\gamma}{1-\gamma}}$$

Dabei ist $p_t$ der Totaldruck und M die Mach-Zahl des Mediums. Die Mach-Zahl M wird durch nachfolgende Gleichung (23) ausgedrückt, wobei u die Strömungsgeschwindigkeit des Mediums und a die Schallgeschwindigkeit ist. $\gamma$ wird durch die Gleichung (24) ausgedrückt, wobei $c_v$ die spezifische Wärmekapazität des Mediums bei konstantem Volumen und $c_p$ die spezifische Wärmekapazität unter konstantem Druck ist.

$$(23) \quad M = \frac{u}{a}$$

$$(24) \quad \gamma \equiv \frac{c_p}{c_v}$$

**Patentansprüche**

1. Verfahren zum Bestimmen eines Massedurchflusses $\dot{m}$ eines zumindest zeitweise mindestens zweiphasigen Mediums durch ein Messrohr (4; 28) eines Wirbelströmungsmessgerätes (2; 26),

   - wobei das Messrohr (4) derart in eine Rohrleitung eingesetzt ist, so dass es von dem in der Rohrleitung strömenden Medium in einer Strömungsrichtung (6) durchströmt wird,
   - wobei das Messrohr (4; 28) in einem Messquerschnitt (36) mindestens einen Staukörper (8; 30) zur Erzeugung von Wirbeln aufweist und wobei durch sensorische Erfassung der erzeugten Wirbel eine Strömungsgeschwindigkeit des Mediums im Bereich des Messquerschnitts (36) bestimmt wird,
   - und wobei das Messrohr (28) um einen Bereich des Messquerschnitts (36) herum verjüngt ist gegenüber sich beidseitig anschließenden, jeweils einen Anschlussrohrquerschnitt (44) aufweisenden Anschlussrohren (40, 42),

   welches Verfahren folgende Schritte umfaßt:

A) Bestimmen der Dichte ρ des Mediums im Bereich des Messquerschnitts (36) aus der spezifischen, totalen Enthalpie ho des Mediums im Bereich des Messquerschnitts (36), aus der Strömungsgeschwindigkeit u des Mediums im Bereich des Messquerschnitts (36), aus einem statischen Druck p des Mediums im Bereich des Messquerschnitts (36) und aus einer statischen Temperatur T des Mediums im Bereich des Messquerschnitts (36); und

B) Bestimmen des Massedurchflusses $\dot{m}$ aus der bestimmten Strömungsgeschwindigkeit u, der bestimmten Dichte ρ und einem Strömungsquerschnitt des Mediums im Bereich des Messquerschnitts (36),

wobei der statische Druck p und die statische Temperatur T des Mediums im Bereich des Messquerschnitts (36) erfasst werden

und wobei der Massedurchfluß $\dot{m}$ und die spezifische, totale Enthalpie $h_0$ iterativ bestimmt werden, indem die spezifische, totale Enthalpie $h_0$ aus dem Massedurchfluß $\dot{m}$ bestimmt wird.

2. Verfahren gemäß Anspruch 1, **dadurch gekennzeichnet, dass** die Schritte des Bestimmens der Strömungsgeschwindigkeit, des Bestimmens der Dichte und des Bestimmens des Massedurchflusses in dem Wirbelströmungsmessgerät (2; 26) durchgeführt werden.

3. Verfahren gemäß Anspruch 1 oder 2, **dadurch gekennzeichnet, dass** die spezifische, totale Enthalpie des Mediums im Bereich des Messquerschnitts (36) aus dem Druck und der Temperatur eines Systems bestimmt wird, dem das strömende Medium entnommen wird und in dem das Medium vor dessen Entnahme ruht.

4. Verfahren gemäß einem der vorangehenden Ansprüche, **dadurch gekennzeichnet, dass** die spezifische, totale Enthalpie des Mediums im Bereich des Messquerschnitts (36) aus einer bekannten, spezifischen, totalen Enthalpie des Mediums in einem, stromaufwärts oder stromabwärts von dem Messquerschnitt (36) gelegenen Abschnitt unter Berücksichtigung eines Wärmeübergangs auf das strömende Medium von dem Abschnitt bis zu dem Messquerschnitt (36) bestimmt wird.

5. Verfahren gemäß einem der vorangehenden Ansprüche, **dadurch gekennzeichnet, dass** das strömende Medium mindestens einen Stoff enthält, der zumindest bei einem Teil der möglichen Prozessbedingungen im Bereich des Messquerschnitts (36) zu einem ersten Massenanteil in einer ersten Phase und zu dem verbleibenden, zweiten Massenanteil dieses Stoffes in einer zweiten Phase vorliegt.

6. Verfahren gemäß Anspruch 5, **dadurch gekennzeichnet, dass** die erste Phase gasförmig ist und dass die zweite Phase flüssig ist.

7. Verfahren gemäß Anspruch 5 oder 6, **dadurch gekennzeichnet, dass** der erste Massenanteil des Stoffes dadurch bestimmt wird, dass eine Gleichung, in welcher die spezifische, totale Enthalpie des Mediums im Bereich des Messquerschnitts (36) durch die Summe der kinetischen Energie des Mediums im Bereich des Messquerschnitts (36), der spezifischen Enthalpie von dem Stoff in der ersten Phase im Bereich des Messquerschnitts (36) mal den ersten Massenanteil des Stoffes, der spezifischen Enthalpie von dem Stoff in der zweiten Phase im Bereich des Messquerschnitts (36) mal den zweiten Massenanteil des Stoffes und gegebenenfalls weiterer, spezifischer Enthalpien im Bereich des Messquerschnitts (36) von weiteren, in dem Medium enthaltenen Stoffen in deren jeweiliger Phase mal deren jeweiligen Massenanteilen ausgedrückt wird, nach dem ersten Massenanteil des Stoffes in der ersten Phase aufgelöst wird.

8. Verfahren gemäß Anspruch 7, **dadurch gekennzeichnet, dass** die Dichte des Mediums im Bereich des Messquerschnitts (36) aus dem ersten Massenanteil des Stoffes in der ersten Phase und dessen Dichte im Bereich des Messquerschnitts (36), dem zweiten Massenanteil des Stoffes in der zweiten Phase und dessen Dichte im Bereich des Messquerschnitts (36) sowie gegebenenfalls weiterer Massenanteile von weiteren, in dem Medium enthaltenen Stoffen in deren jeweiliger Phase und deren jeweiliger Dichten im Bereich des Messquerschnitts (36) bestimmt wird.

9. Verfahren gemäß einem der vorangehenden Ansprüche, **dadurch gekennzeichnet, dass** mindestens eine der nachfolgenden, im Bereich des Messquerschnitts (36) vorliegenden Größen aus dem, im Bereich des Messquerschnitts (36) vorliegenden, statischen Druck des Mediums und aus der, im Bereich des Messquerschnitts (36) vorliegenden, statischen Temperatur des Mediums bestimmt wird:

die spezifische Enthalpie des Stoffes in der ersten Phase im Bereich des Messquerschnitts (36);
die spezifische Enthalpie des Stoffes in der zweiten Phase im Bereich des Messquerschnitts (36);

weitere spezifische Enthalpien von weiteren, in dem Medium enthaltenen Stoffen in deren jeweiliger Phase im Bereich des Messquerschnitts (36);
Dichte des Stoffes in dessen erster Phase im Bereich des Messquerschnitts (36);
Dichte des Stoffes in dessen zweiter Phase im Bereich des Messquerschnitts (36); und/oder
Dichte von weiteren, in dem Medium enthaltenen Stoffen in deren jeweiliger Phase im Bereich des Messquerschnitts (36).

10. Verfahren gemäß einem der Ansprüche 1 bis 6, **dadurch gekennzeichnet, dass** im Voraus ermittelte Abhängigkeiten der Dichte des Mediums im Bereich des Messquerschnitts (36) von der spezifischen, totalen Enthalpie des Mediums im Bereich des Messquerschnitts (36), der Strömungsgeschwindigkeit des Mediums im Bereich des Messquerschnitts (36), dem statischen Druck des Mediums im Bereich des Messquerschnitts (36) und der statischen Temperatur des Mediums im Bereich des Messquerschnitts (36) elektronisch hinterlegt sind und dass bei dem Schritt des Bestimmens der Dichte des Mediums im Bereich des Messquerschnitts (36) die Dichte anhand der, im Bereich des Messquerschnitts (36) tatsächlich vorliegenden Größen der spezifischen, totalen Enthalpie des Mediums im Bereich des Messquerschnitts (36), der Strömungsgeschwindigkeit des Mediums im Bereich des Messquerschnitts (36), des statischen Druckes des Mediums im Bereich des Messquerschnitts (36) und der statischen Temperatur des Mediums im Bereich des Messquerschnitts (36) bestimmt wird.

11. Verfahren gemäß Anspruch 10, **dadurch gekennzeichnet, dass** die Abhängigkeiten der Dichte des Mediums im Bereich des Messquerschnitts (36) von der spezifischen, totalen Enthalpie des Mediums im Bereich des Messquerschnitts (36), der Strömungsgeschwindigkeit des Mediums im Bereich des Messquerschnitts (36), des statischen Druckes des Mediums im Bereich des Messquerschnitts (36) und der statischen Temperatur des Mediums im Bereich des Messquerschnitts (36) in Form einer mehrdimensionalen Tabelle hinterlegt sind.

12. Wirbelströmungsmessgerät, eingerichtet zur Durchführung eines Verfahrens gemäß einem der vorherigen Ansprüche,

- wobei das Wirbelströmungsmessgerät ein Messrohr (4; 28) aufweist, das im Einsatz derart in eine Rohrleitung eingesetzt ist, so dass es von dem in der Rohrleitung strömenden Medium in einer Strömungsrichtung (6) durchströmt wird,
- wobei das Wirbelströmungsmessgerät (2; 26) mindestens einen, innerhalb des Messrohres (4; 28), nämlich in einem Messquerschnitt (36) angeordneten Staukörper (8; 30) zur Erzeugung von Wirbeln aufweist,
- wobei das Wirbelströmungsmessgerät (2; 26) mindestens einen Wirbelsensor (14; 22) zur sensorischen Erfassung der erzeugten Wirbel aufweist,
- und wobei das Wirbelströmungsmessgerät (2; 26) eine Elektronik (52) zur Bestimmung der Strömungsgeschwindigkeit des Mediums im Bereich des Messquerschnitts (36) aufweist,

die derart ausgebildet ist,

-- dass durch diese die Dichte $\rho$ des strömenden Mediums im Bereich des Messquerschnitts (36) aus der spezifischen, totalen Enthalpie des Mediums im Bereich des Messquerschnitts (36), aus der Strömungsgeschwindigkeit des Mediums im Bereich des Messquerschnitts (36), aus dem statischen Druck des Mediums im Bereich des Messquerschnitts (36) und aus der statischen Temperatur des Mediums im Bereich des Messquerschnitts (36) bestimmbar ist
-- und dass durch diese aus der bestimmten Strömungsgeschwindigkeit, der bestimmten Dichte und einem Strömungsquerschnitt des Mediums im Bereich des Messquerschnitts (36) der Massedurchfluss des Mediums bestimmbar ist,

- wobei das Messrohr (28) um den Bereich des Messquerschnitts (36) herum verjüngt ist gegenüber sich beidseitig anschließenden, jeweils einen Anschlussrohrquerschnitt (44) aufweisenden Anschlussrohren (40, 42),
- und wobei das Wirbelströmungsmessgerät im Bereich des Messquerschnitts (36) weiters einen Drucksensor (50) zur Bestimmung des statischen Drucks des Mediums im Bereich des Messquerschnitts (36) und einen Temperatursensor (48) zur Bestimmung der statischen Temperatur des Mediums im Bereich des Messquerschnitts (36) aufweist.

**Claims**

1. Procedure for determining a mass flow m of a medium, which is at least two-phase at least temporarily, through a measuring tube (4, 28) of a vortex flowmeter (2, 26),

   - wherein the measuring tube (4) is inserted in a pipe in such a way that the medium flowing in the pipe flows through the measuring tube in a flow direction (6),
   - wherein the measuring tube (4, 28) has at least a bluff body (8, 30) in a measuring section (36), said bluff body being designed to generate vortices and wherein a flow velocity of the medium in the area of the measuring section (36) is determined by the sensing-based detection of the generated vortices,
   - and wherein the measuring tube (28) is tapered around an area of the measuring section (36) in relation to connection tubes (40, 42) which follow on at both sides and each have a connection tube cross-section (44),

   said procedure comprises the following steps:

   A) Determination of the density $\rho$ of the medium in the area of the measuring section (36) from the specific, total enthalpy ho of the medium in the area of the measuring section (36), from the flow velocity u of the medium in the area of the measuring section (36), from a static pressure p of the medium in the area of the measuring section (36) and from a static temperature T of the medium in the area of the measuring section (36), and
   B) Determination of the mass flow $m$ from the determined flow velocity u, from the determined density $\rho$ and a flow cross-section of the medium in the area of the measuring section (36),

   wherein the static pressure p and the static temperature T of the medium are measured in the area of the measuring section (36)
   and wherein the mass flow $m$ and the specific, total enthalpy ho are determined in an iterative manner in that the specific, total enthalpy $h_0$ is determined from the mass flow $m$.

2. Procedure as claimed in Claim 1, **characterized in that** the steps to determine the flow velocity, the density and the mass flow are performed in the vortex flowmeter (2, 26).

3. Procedure as claimed in Claim 1 or 2, **characterized in that** the specific, total enthalpy of the medium in the area of the measuring section (36) is determined from the pressure and the temperature of a system in which the flowing medium is sampled and in which the medium rests before it is sampled.

4. Procedure as claimed in one of the previous claims, **characterized in that** the specific, total enthalpy of the medium in the area of the measuring section (36) is determined from a known specific, total enthalpy of the medium in a section located upstream or downstream of the measuring section (36), taking into account a transfer of heat to the flowing medium from the section to the measuring section (36).

5. Procedure as claimed in one of the previous claims, **characterized in that** the flowing medium contains at least one substance that is present, at least for a part of the potential process conditions, in the area of the measuring section (36) in the form of a first mass fraction in a first phase and the remaining second mass fraction of this substance in a second phase.

6. Procedure as claimed in Claim 5, **characterized in that** the first phase is gaseous and the second phase is liquid.

7. Procedure as claimed in Claim 5 or 6, **characterized in that** the first mass fraction of the substance is determined **in that** an equation - which expresses the specific, total enthalpy of the medium in the area of the measuring section (36) divided by the sum of the kinetic energy of the medium in the area of the measuring section (36), the specific enthalpy of the substance in the first phase in the area of the measuring section (36) multiplied by the first mass fraction of the substance, the specific enthalpy of the substance in the second phase in the area of the measuring section (36) multiplied by the second mass fraction of the substance and, where applicable, additional specific enthalpies in the area of the measuring section (36) of other substances contained in the medium in their respective phase multiplied by their respective mass fraction - is resolved following the first mass fraction of the substance in the first phase.

8. Procedure as claimed in Claim 7, **characterized in that** the density of the medium in the area of the measuring section (36) is determined from the first mass fraction of the substance in the first phase and its density in the area of the measuring section (36), the second mass fraction of the substance in the second phase and its density in the area of the measuring section (36) and, where applicable, additional mass fractions of other substances contained in the medium in their respective phase and their respective densities in the area of the measuring section (36).

9. Procedure as claimed in one of the previous claims, **characterized in that** at least one of the following variables present in the area of the measuring section (36) is determined from the static pressure of the medium present in the area of the measuring section (36) and from the static temperature present in the area of the measuring section (36):

the specific enthalpy of the substance in the first phase in the area of the measuring section (36);
the specific enthalpy of the substance in the second phase in the area of the measuring section (36);
additional specific enthalpies of other substances contained in the medium in their respective phase in the area of the measuring section (36);
the density of the substance in its first phase in the area of the measuring section (36);
the density of the substance in its second phase in the area of the measuring section (36); and/or
the density of other substances contained in the medium in their respective phase in the area of the measuring section (36).

10. Procedure as claimed in one of the Claims 1 to 6, **characterized in that** dependencies, determined in advance, of the density of the medium in the area of the measuring section (36) in relation to the specific, total enthalpy of the medium in the area of the measuring section (36), the flow velocity of the medium in the area of the measuring section (36), the static pressure of the medium in the area of the measuring section (36) and the static temperature of the medium in the area of the measuring section (36) are saved electronically, and **in that** the step involving the determination of the density of the medium in the area of the measuring section (36), the density is determined using the variables, which are actually present in the area of the measuring section (36), of the specific, total enthalpy of the medium in the area of the measuring section (36), the flow velocity of the medium in the area of the measuring section (36), the static pressure of the medium in the area of the measuring section (36) and the static temperature of the medium in the area of the measuring section (36).

11. Procedure as claimed in Claim 10, **characterized in that** the dependencies of the density of the medium in the area of the measuring section (36) in relation to the specific, total enthalpy of the medium in the area of the measuring section (36), the flow velocity of the medium in the area of the measuring section (36), the static pressure of the medium in the area of the measuring section (36) and the static temperature of the medium in the area of the measuring section (36), are saved in the form of a multidimensional table.

12. Vortex flowmeter, configured to carry out a procedure as claimed in one of the previous claims,

- wherein the vortex flowmeter has a measuring tube (4, 28) which, during use, is inserted in a pipe in such a way that the medium flowing in the pipe flows through it in a flow direction (6),
- wherein the vortex flowmeter (2, 26) has at least a bluff body (8, 30) arranged inside the measuring tube (4, 28), namely in a measuring section (36), said bluff body being designed to generate vortices,
- wherein the vortex flowmeter (2, 26) has at least one vortex sensor (14, 22) for the sensing-based detection of the generated vortices,
- and wherein the vortex flowmeter (2, 26) has an electronics unit (52) to determine the flow velocity of the medium in the area of the measuring section (36),

said electronics unit being designed in such a way

-- that it can be used to determine the density $\rho$ of the flowing medium in the area of the measuring section (36) from the specific, total enthalpy of the medium in the area of the measuring section (36), from the flow velocity of the medium in the area of the measuring section (36), from the static pressure of the medium in the area of the measuring section (36) and from the static temperature of the medium in the area of the measuring section (36)
-- and that it can be used to determine the mass flow of the medium from the determined flow velocity, from the determined density and from a flow cross-section of the medium in the area of the measuring section (36),

- wherein the measuring tube (28) tapers around the area of the measuring section (36) in relation to connection tubes (40, 42) which follow on at both sides and each have a connection tube cross-section (44),
- and wherein, in the area of the measuring section (36), the vortex flowmeter further has a pressure sensor (50) which is designed to determine the static pressure of the medium in the area of the measuring section (36), and a temperature sensor (48) designed to determine the static temperature of the medium in the area of the measuring section (36).

## Revendications

1.  Procédé destiné à la détermination d'un débit massique $m$ d'au moins un produit au minimum biphasique à travers un tube de mesure (4, 28) d'un débitmètre vortex (2, 26),

    - pour lequel le tube de mesure (4) est inséré dans une conduite de telle sorte que le produit circulant dans la conduite la traverse dans un sens d'écoulement (6),
    - pour lequel le tube de mesure (4, 28) présente au moins un corps de retenue (8, 30) dans une section de mesure (36) destiné à la génération de tourbillons et une vitesse d'écoulement du produit dans la zone de la section de mesure (36) étant déterminée par détection sensorielle des tourbillons générés,
    - et pour lequel le diamètre du tube de mesure (28) est réduit autour d'une zone de la section de mesure (36) par rapport aux tubes de raccordement (40, 42) présentant une section de tube de raccordement (44) et qui sont raccordés aux deux côtés du tube de mesure,

    lequel procédé comprend les étapes suivantes :

    A) Détermination de la densité $\rho$ du produit dans la zone de la section de mesure (36) à partir de l'enthalpie totale spécifique $h_0$ du produit dans la zone de la section de mesure (36), à partir de la vitesse d'écoulement u du produit dans la zone de la section de mesure (36), à partir d'une pression statique p du produit dans la zone de la section de mesure (36) et à partir d'une température statique T du produit dans la zone de la section de mesure (36), et
    B) Détermination du débit massique $m$ à partir de la vitesse d'écoulement u déterminée, de la densité $\rho$ déterminée et d'une section d'écoulement du produit dans la zone de la section de mesure (36),

    la pression statique p et la température statique T du produit étant mesurées dans la zone de la section de mesure (36) et le débit massique $m$ et l'enthalpie ho étant déterminées de manière itérative en ce que l'enthalpie totale spécifique ho est déterminée à partir du débit massique $m$.

2.  Procédé selon la revendication 1, **caractérisé en ce que** les étapes de la détermination de la vitesse d'écoulement, de la détermination de la densité et de la détermination du débit massique sont effectuées dans le débitmètre vortex (2, 26).

3.  Procédé selon la revendication 1 ou 2, **caractérisé en ce que** l'enthalpie totale spécifique du produit dans la zone de la section de mesure (36) est déterminée à partir de la pression et de la température d'un système dans lequel le produit en écoulement est prélevé et dans lequel le produit repose avant d'être prélevé.

4.  Procédé selon l'une des revendications précédentes, **caractérisé en ce que** l'enthalpie totale spécifique du produit dans la zone de la section de mesure (36) est déterminée à partir d'une enthalpie totale spécifique connue du produit dans un tronçon situé en amont ou en aval de la section de mesure (36), en tenant compte d'un transfert de chaleur au produit en écoulement du tronçon jusqu'à la section de mesure (36).

5.  Procédé selon l'une des revendications précédentes, **caractérisé en ce que** le produit en écoulement contient au moins une substance qui est présente au moins dans une partie des conditions de process possibles dans la zone de la section de mesure (36) à une première fraction massique dans une première phase et à la deuxième fraction massique restante de cette substance dans une deuxième phase.

6.  Procédé selon la revendication 5, **caractérisé en ce que** la première phase est gazeuse et la deuxième phase est liquide.

7.  Procédé selon la revendication 5 ou 6, **caractérisé en ce que** la première fraction massique de la substance est déterminée **en ce qu'**une équation - dans laquelle sont exprimées l'enthalpie totale spécifique du produit dans la zone de la section de mesure (36) divisée par la somme de l'énergie cinétique du produit dans la zone de la section de mesure (36), l'enthalpie spécifique de la substance dans la première phase dans la zone de la section de mesure (36) multipliée par la première fraction massique de la substance, l'enthalpie spécifique de la substance dans la deuxième phase dans la zone de la section de mesure (36) multipliée par la deuxième fraction massique de la substance et, le cas échéant, d'autres enthalpies spécifiques dans la zone de la section de mesure (36) d'autres substances contenues dans le produit dans leur phase respective multipliée par leur fraction massique respective - est résolue après la première fraction massique de la substance dans la première phase.

8. Procédé selon la revendication 7, **caractérisé en ce que** la densité du produit dans la zone de la section de mesure (36) est déterminée à partir de la première fraction massique de la substance dans la première phase et de sa densité dans la zone de la section de mesure (36), de la deuxième fraction massique de la substance dans la deuxième phase et de sa densité dans la zone de la section de mesure (36) et, le cas échéant, d'autres fractions massiques d'autres substances contenues dans le produit dans la phase respective et leurs densités respectives dans la zone de la section de mesure (36).

9. Procédé selon l'une des revendications précédentes, **caractérisé en ce qu'**au moins l'une des grandeurs suivantes, présentes dans la zone de la section de mesure (36), est déterminée à partir de la pression statique du produit présente dans la zone de la section de mesure (36) et à partir de la température statique présente dans la zone de la section de mesure (36) :

   l'enthalpie spécifique de la substance dans la première phase dans la zone de la section de mesure (36) ;
   l'enthalpie spécifique de la substance dans la deuxième phase dans la zone de la section de mesure (36) ;
   d'autres enthalpies spécifiques d'autres substances contenues dans le produit, dans leur phase respective dans la zone de la section de mesure (36) ;
   la densité de la substance dans sa première phase dans la zone de la section de mesure (36) ;
   la densité de la substance dans sa deuxième phase dans la zone de la section de mesure (36) ; et/ou
   la densité d'autres substances contenues dans le produit, dans leur phase respective dans la zone de la section de mesure (36).

10. Procédé selon l'une des revendications 1 à 6, **caractérisé en ce que** les dépendances, déterminées au préalable, de la densité du produit dans la zone de la section de mesure (36) par rapport à l'enthalpie totale spécifique du produit dans la zone de la section de mesure (36), de la vitesse d'écoulement du produit dans la zone de la section de mesure (36), de la pression statique du produit dans la zone de la section de mesure (36) et de la température statique dans la zone de la section de mesure (36) sont enregistrées électroniquement, et **en ce que**, lors de l'étape de la détermination de la densité du produit dans la zone de la section de mesure (36), la densité est déterminée au moyen des grandeurs effectivement présentes dans la zone de la section de mesure (36), de l'enthalpie totale spécifique du produit dans la zone de la section de mesure (36), de la vitesse d'écoulement du produit dans la zone de la section de mesure (36), de la pression statique du produit dans la zone de la section de mesure (36) et de la température statique du produit dans la zone de la section de mesure (36).

11. Procédé selon la revendication 10, **caractérisé en ce que** les dépendances de la densité du produit dans la zone de la section de mesure (36) par rapport à l'enthalpie du produit dans la zone de la section de mesure (36), la vitesse d'écoulement du produit dans la zone de la section de mesure (36), la pression statique du produit dans la zone de la section de mesure (36) et la température statique du produit dans la zone de la section de mesure (36), sont enregistrées sous la forme d'un tableau multidimensionnel.

12. Débitmètre vortex, configuré pour la réalisation d'un procédé selon l'une des revendications précédentes,

   - le débitmètre vortex comportant un tube de mesure (4, 28) qui, lors de l'utilisation, est inséré dans la conduite de telle sorte à être parcouru par le produit en écoulement dans un sens d'écoulement (6),
   - le débitmètre vortex (2, 26) comportant au moins un corps de retenue (8, 30) disposé à l'intérieur du tube de mesure (4, 28), notamment dans une section de mesure (36), lequel corps de retenue est destiné à la génération de tourbillons,
   - le débitmètre vortex (2, 26) comportant au moins un capteur vortex (14, 22) destiné à la détection sensorielle des tourbillons générés,
   - et le débitmètre vortex (2, 26) comportant une électronique (52) destinée à la détermination de la vitesse d'écoulement du produit dans la zone de la section de mesure (36),

laquelle électronique est conçue de telle sorte

-- à ce que celle-ci puisse déterminer la densité $\rho$ du produit en écoulement dans la zone de la section de mesure (36) à partir de l'enthalpie totale spécifique du produit dans la zone de la section de mesure (36), à partir de la vitesse d'écoulement du produit dans la zone de la section de mesure (36), à partir de la pression statique du produit dans la zone de la section de mesure (36) et à partir de la température statique du produit dans la zone de la section de mesure (36)

-- et à ce que le débit massique du produit puisse être déterminé à partir de la vitesse d'écoulement déterminée, de la densité déterminée et d'une section d'écoulement du produit dans la zone de la section de mesure (36),

- le diamètre du tube de mesure (28) étant réduit autour de la zone de la section de mesure (36) par rapport aux tubes de raccordement (40, 42) présentant chacun une section de tube de raccordement (44) et qui sont raccordés aux deux côtés du tube de mesure,
- et le débitmètre vortex comportant en outre, dans la zone de la section de mesure (36), un capteur de pression (50) destiné à la détermination de la pression statique du produit dans la zone de la section de mesure (36), et un capteur de température (48) destiné à la détermination de la température statique du produit dans la zone de la section de mesure (36).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009003966 A
- US 2007163361 A